# EUROPEAN PATENT SPECIFICATION

(11) **EP 0 576 542 B1**
(45) Date of publication and mention of the grant of the patent: **06.05.1998**
(21) Application number: 92907939.0
(22) Date of filing: 10.03.1992
(51) Int. Cl.: B32B 15/02, G08C 21/00

(54) **FLEXIBLE DIGITIZER TABLET**
FLEXIBLES ANALOG/DIGITALUMSETZERTABLETT
TABLETTE A NUMERISER FLEXIBLE

(30) Priority: 20.03.1991 US 673768
(43) Date of publication of application: 05.01.1994
(73) Proprietor: CALCOMP INC., Anaheim, CA 92803 (US)
(72) Inventor: LONG, Gary, R., Paradise Valley, AZ 85253 (US); DOUBRAVA, Dana, Phoenix, AZ 85029 (US)
(74) Representative: Boon, Graham Anthony
(86) International application number: US9201876
(87) International publication number: WO9216368

(56) References cited:
- WO-A-90/06563
- US-A- 4 645 869
- US-A- 4 853 497
- US-A- 4 943 689

## Description

### Background of the Invention:

This invention relates to digitizer tablets and, more particularly, in a flexible digitizer tablet comprising a grid of wires on a flexible substrate, to the improvement to eliminate signal interference adjacent edges of a sensing area of the grid of wires comprising a shunt layer of a flexible metal foil disposed in close-spaced parallel relationship to the grid of wires.

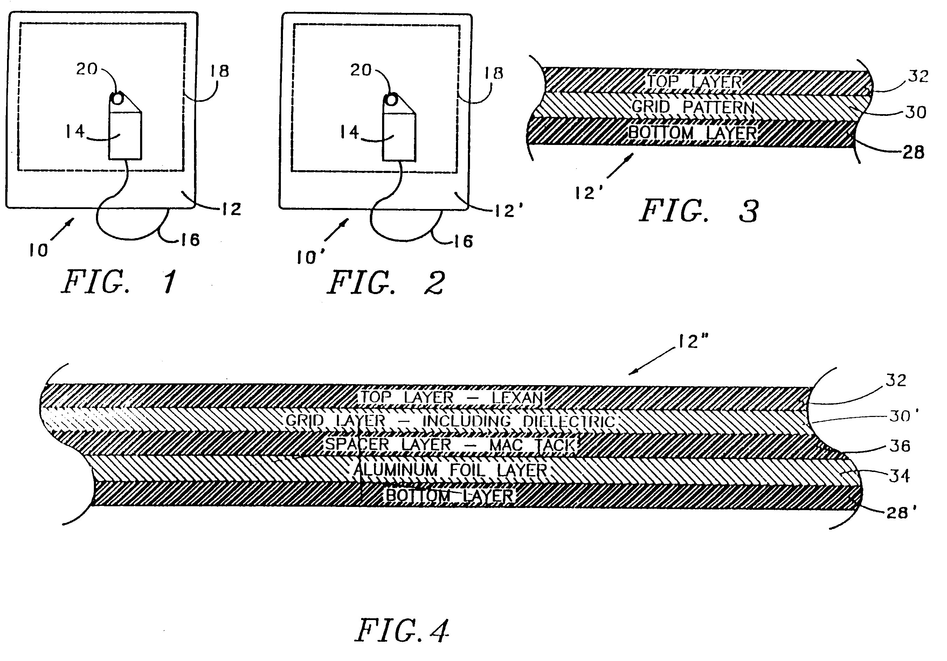

Digitizer tablets for inputting positional information into computers for use by programs running therein are well known in the art. The majority of digitizer tablet systems are as shown in Figure 1. The system 10 comprises a tablet 12 and a cursor 14 which is moved over the tablet 12. The cursor 14 is connected to the tablet 12 by the connecting cable 16 and to a computer (not shown for simplicity) by another connecting cable (also not shown). The tablet 12 is rigid in structure and contains a grid of wires as indicated by the dashed box 18. The cursor 14 includes an electrical coil 20 through which a current is pulsed to generate a magnetic field surrounding the coil 20. As the cursor 12 is moved over the tablet 12, the magnetic field being produced by the coil 20 is sensed by the sensing wires of the grid and thereby the position of the cursor 12 on the surface of the tablet 12 is determined.

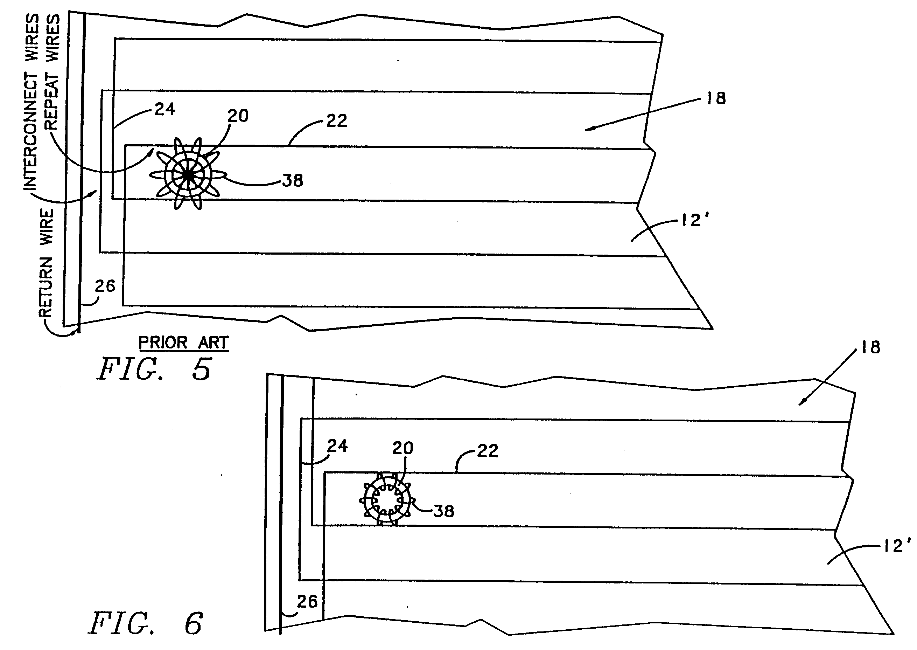

Some attempts have been made in the prior art to produce a flexible digitizer tablet as illustrated in Figure 2 where it is labeled as 12'. A flexible digitizer tablet has advantages in certain applications. For example, it can be rolled up for storage instead of taking up its full space. The flexible tablet 12' has a grid of wires 18 just as in the solid tablet 12 of Figure 1 except that the wires 18 are printed onto the substrate material forming the flexible tablet 12' instead of merely being supported by the tablet 12. While prior art flexible digitizer tablets work for their intended purpose in general, they have problems adjacent the edges which have made them unacceptable for commercial purposes. The major problem of prior art flexible digitizer tablets is illustrated in Figure 5. The grid of wires 18 adjacent its edges includes repeat wires 22, interconnecting wires 24, and a return wire 26. The magnetic field 38 produced by the coil 20 extends outward surrounding the coil 20 in the manner illustrated in Figure 5. Thus, as the coil 20 is brought close to the edge of the working area of the tablet 12', the magnetic field 38 radiates into the repeat wires 22, interconnecting wires 24, and a return wire 26 causing significant interference with the data indicating the position of the coil 20 (and thereby the cursor 14) on the surface of the tablet 12'.

US-A-4853497 describes a digitizer tablet having a grid of wires on a substrate, comprising a shunt layer of a metal for substantially eliminating signal interference adjacent edges of a sensing area of the grid of wires.

It is the object of this invention to provide a flexible digitizer tablet with the advantages thereof which does not have the disadvantages adjacent the edges relative to signal interference of prior art flexible digitizer tablets.

Other objects and benefits of the invention will now become apparent from the detailed description which follows hereinafter when taken in conjunction with the drawing figures which accompany it.

### Summary:

According to the invention there is provided digitizer tablet having a grid of wires on a substrate, comprising a shunt layer of a metal for substantially eliminating signal interference adjacent edges of a sensing area of the grid of wires, characterized in that said tablet is a flexible tablet and said shunt layer is of a flexible metal foil disposed in close-spaced parallel relationship to the grid of wires, said shunt layer having a thickness of between 12.7 µm (0.5 mil) and 38.1 µm (1.5 mil).

In the preferred embodiment, the shunt layer is an aluminium foil. Additionally the shunt layer is adhesively attached to the substrate and the bottom layer with a spacing layer. The preferred spacing layer is a plastic film having an adhesive on both sides thereof.

Preferably, the shunt layer is spaced at a distance from the grid of wires which allows a portion of the magnetic field to be unshunted in an amount which develops a sufficient positional sensing signal in the grid of wires for sensing the position of the cursor coil and thereby the cursor.

### Description of the Drawings:

Figure 1 is a simplified drawing of a prior art digitizer tablet of a general type which is not flexible.

Figure 2 is a simplified drawing of a prior art digitizer tablet which is flexible.

Figure 3 is a simplified cutaway drawing through a portion of the flexible digitizer tablet of Figure 2 showing the layers of which it is composed.

Figure 4 is a simplified cutaway drawing through a portion of a flexible digitizer tablet according to the present invention showing the layers of which it is composed.

Figure 5 is a simplified drawing adjacent the edge of a portion of the flexible digitizer tablet of Figure 2 showing the wire types disposed therein and the coil of the cursor with its generated magnetic field to illustrate a problem of prior art flexible digitizer tablets.

Figure 6 is a simplified drawing adjacent the edge of a portion of the flexible digitizer tablet of Figure 4 showing the wire types disposed therein and the coil of the cursor with its generated magnetic field as modified by the structure of the present invention to remove the problem shown in Figure 5.

### Description of the Preferred Embodiment:

The construction of a prior art flexible digitizer tablet is shown in Figure 3. The tablet 12' comprises a bottom layer 28 of a flexible substrate material. The grid layer 30 (including the repeat wires 22, interconnecting wires 24, and return wire 26 as described above) is typically formed on the bottom layer 28 using normal printed circuit techniques. The grid layer 30 is then covered with a protective top layer 32 to prevent the sliding movement of the cursor 14 over the surface the tablet 12' from wearing and damaging the conducive "wires" of the grid layer 30.

The construction of the flexible digitizer tablet of this invention is shown in Figure 4 and the results thereof with respect to the above-described problem to be solved are depicted in Figure 6. The tablet 12'' again includes a bottom layer 28'. The bottom layer 28', however, is not of a flexible substrate material. Rather, it is preferably of a heavy plastic or rubber. The bottom layer 28' has a metal foil 34 adhesively attached over the extents thereof. Aluminum foil has been used with success in thicknesses of from 0.5 mil to 1.5 mil. The thickness only needs to be sufficient to provide the shunting action to be described in detail shortly. If the foil 34 is too thick, flexibility is impaired, costs of manufacture are increased, and the excessive thickness is merely wasted as far as the function to be performed.

The grid layer 30' (again including the repeat wires 22, interconnecting wires 24, and return wire 26 as described above as well as the necessary dielectric layers) is of unitary construction formed on a suitable thin flexible substrate material using normal printed circuit techniques. The grid layer 30' is adhesively attached to the aluminum foil 34. The most convenient method has been found to employ a spacer layer 36 of a material known as "mac tack" which is a thin Mylar having adhesive on both sides. The grid layer 30' is then again covered with a protective top layer 32 to prevent wearing and damaging the conducive "wires" of the grid layer 30 from the sliding movement of the cursor 14 over the surface the tablet 12'. While not part of the novelty of the present invention per se, so-called Lexan plastic has been found to give preferred results as the protective top layer 32.

The effect of the foregoing construction is shown in Figure 6. Metal, of course, will conduct and "shunt" magnetic fields. In this case, the close proximity of the metal foil layer to the grid layer 30 causes the magnetic field 38 produced by the coil 20 which extends outward surrounding the coil 20 to be shunted into a close proximity surrounding the coil 20 as illustrated in the drawing figure. Thus, as the coil 20 is brought close to the edge of the working area of the tablet 12'', the magnetic field 38 is insufficiently large so as radiate significantly into the repeat wires 22, interconnecting wires 24, and return wire 26 and any significant interference with the data indicating the position of the coil 20 (and thereby the cursor 14) on the surface of the tablet 12'' is eliminated.

As those skilled in the art will undoubtedly recognize immediately, by reducing the size of the radiated magnetic field 38 the signal induced into the sensing wires of the grid layer 30 is also reduced. Note, however, that the shunting effect of the metal foil layer 34 is spaced from the actual sensing wires of the grid layer 30 since they are on the top of the substrate thereof and there is also the spacer layer 36 interposed between the grid layer 30 and the metal foil layer 34. This spacing is sufficient to allow the magnetic field 38 to radiate a sufficient distance before being shunted that a signal sufficient for sensing purposes is generated. The signal strength is, of course, somewhat diminished from an unshunted tablet; but, in tests of the present invention, the results were very favorable in that sufficient signal strength was present to determine the position of the coil 20 with usual accuracy while the problems of edge interference were eliminated. Should the foil layer 34 be positioned hard against the sensing wires of the grid layer 30 instead of being spaced therefrom as described, the story would probably be a different one in that the magnetic field 38 would probably be fully shunted and eliminate the development of a sufficient field 38 for proper positional sensing purposes.

## Claims

1. A digitizer tablet (12'') having a grid of wires (22, 24, 26) on a substrate, comprising a shunt layer (34) of a metal for substantially eliminating signal interference adjacent edges of a sensing area of the grid of wires, characterized in that said tablet is a flexible tablet and said shunt layer is of a flexible metal foil disposed in close-spaced parallel relationship to the grid of wires, said shunt layer having a thickness of between 12.7 µm (0.5 mil) and 38.1 µm (1.5 mil).

2. The flexible digitizer tablet of claim 1, wherein said shunt layer (34) is adhesively attached to and electrically insulated from the grid of wires (22, 24, 26).

3. The flexible digitizer tablet of claim 2, wherein said shunt layer (34) is adhesively attached to and electrically insulated from the grid of wires (22, 24, 26) by an electrically insulating plastic film (36) having adhesive on both sides thereof, said plastic film being disposed between the shunt layer and the grid of wires.

4. The flexible digitizer tablet of claim 1, wherein said shunt layer (34) is an aluminum foil.

5. The flexible digitizer tablet of claim 1, further comprising:
a bottom layer (28') of a flexible insulating material, wherein said shunt layer (34) is disposed between said substrate carrying said grid of wires (22, 24, 26) and said bottom layer, and adhesively attached to and electrically insulated from said substrate carrying said grid of wires on one side and adhesively attached to said bottom layer on an opposite side.

## Patentansprüche

1. Digitalisiertablett (12'') mit einem Leitungsgitter (22, 24, 26) auf einem Substrat, umfassend eine Nebenschlußschicht (34) aus einem Metall, um eine Signalstörung benachbart Rändern eines Abtastbereichs des Leitungsgitters im wesentlichen zu beseitigen,
dadurch gekennzeichnet,
daß das Tablett ein flexibles Tablett ist und die Nebenschlußschicht von einer flexiblen Metallfolie gebildet ist, die in dicht beabstandeter paralleler Beziehung zu dem Leitungsgitter angeordnet ist, wobei die Nebenschlußschicht eine Dicke zwischen 12,7 µm (0,5 mil) und 38,1 µm (1,5 mil) aufweist.

2. Flexibles Digitalisiertablett nach Anspruch 1, wobei die Nebenschlußschicht (34) an dem Leitungsgitter (22, 24, 26) haftend angebracht ist und von diesem elektrisch isoliert ist.

3. Flexibles Digitalisiertablett nach Anspruch 2, wobei die Nebenschlußschicht (34) an dem Leitungsgitter (22, 24, 26), haftend angebracht und von diesem elektrisch isoliert ist, und zwar durch einen elektrisch isolierenden Kunststoffilm (36), der an seinen beiden Seiten ein Haftmittel aufweist, wobei der Kunststoffilm zwischen der Nebenschlußschicht und dem Leitungsgitter angeordnet ist.

4. Flexibles Digitalisiertablett nach Anspruch 1, wobei die Nebenschlußschicht (34) eine Aluminiumfolie ist.

5. Flexibles Digitalisiertablett nach Anspruch 1, ferner umfassend:
eine Bodenschicht (28'), aus einem flexiblen isolierenden Material, wobei die Nebenschlußschicht (34) zwischen dem das Leitungsgitter (22, 24, 26) tragenden Substrat und der Bodenschicht angeordnet ist und an dem das Leitungsgitter tragenden Substrat auf einer Seite haftend angebracht und von dem Substrat elektrisch isoliert ist und an einer entgegengesetzten Seite an der Bodenschicht haftend angebracht ist.

## Revendications

1. Tablette de convertisseur analogique/numérique (12'') comportant un réseau de fils (22, 24, 26) sur un substrat, constituée d'une couche de dérivation (34) d'un métal pour supprimer sensiblement les parasites de signaux contiguë aux bords d'une zone de détection du réseau de fils, caractérisée en ce que la tablette est une tablette souple et la couche de dérivation est constituée d'une feuille métallique souple disposée en relation parallèle étroitement espacée par rapport au réseau de fils, cette couche de dérivation ayant une épaisseur entre 12,7 µm et 38,1 µm.

2. Tablette de convertisseur analogique/numérique souple selon la revendication 1, dans laquelle la couche de dérivation (34) est fixée de façon adhésive sur et isolée électriquement du réseau de fils (22, 24, 26).

3. Tablette de convertisseur analogique/numérique souple selon la revendication 2, dans laquelle la couche de dérivation (34) est fixée de façon adhésive sur et isolée électriquement du réseau de fils (22, 24, 26) par un film plastique électriquement isolant (36) ayant une substance adhésive sur ses deux côtés, ce film plastique étant disposé entre la couche de dérivation et le réseau de fils.

4. Tablette de convertisseur analogique/numérique souple selon la revendication 1, dans laquelle la couche de dérivation (34) est une feuille d'aluminium.

5. Tablette de convertisseur analogique/numérique souple selon la revendication 1, comprenant de plus :
une couche de fond (28') d'un matériau isolant souple dans laquelle la couche de dérivation (34) est disposée entre le substrat portant le réseau de fils (22, 24, 26) et la couche de fond, et fixée de façon adhésive sur et isolée électriquement du substrat portant le réseau de fils sur un côté et fixée de façon adhésive sur la couche de fond sur un côté opposé.
